# EUROPÄISCHE PATENTSCHRIFT

(11) **EP 1 215 929 B1**
(45) Veröffentlichungstag und Bekanntmachung des Hinweises auf die Patenterteilung: **21.09.2005**
(21) Anmeldenummer: 01000720.1
(22) Anmeldetag: 06.12.2001
(51) Int. Cl.: H04Q 7/38

(54) **Verfahren zum Betrieb eines Telekommunikationssystems**
Method of operating a communication system
Procédé de fonctionnement d'un system de communication

(30) Priorität: 12.12.2000 DE 10061721
(43) Veröffentlichungstag der Anmeldung: 19.06.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Atorf, Manfred, c/o Phil. Corp. Intell. Prop. GmbH, 52066, Aachen (DE)
(74) Vertreter: Volmer, Georg

(56) Entgegenhaltungen:
- EP-A- 0 909 103
- WO-A-00/27152
- WO-A-99/52316

## Beschreibung

Die Erfindung betrifft ein Verfahren zum Betrieb eines Telekommunikationssystems zur Ermöglichung eines Betriebs eines Mobiltelefons mit unterschiedlichen, vom Standort abhängigen Nutzungstarifen.

Die gegebenen deutlichen Differenzen zwischen den teueren Mobilfunktarifen und den wesentlich günstigeren Festnetztarifen haben zur Entwicklung eines Telekommunikationssystems geführt, bei dem ein Mobiltelefonbenutzer abhängig von seinem momentanen Standort entweder zum teureren Mobilfunktarif oder aber zum günstigeren Festnetztarif mobil telefonieren kann. Dieses bekannte System umfasst eine GSM Home Basestation, die benutzerseitig lokal angeordnet ist und ein im Nahbereich befindliches Mobiltelefon erkennen kann. Wenn ein solches Mobiltelefon im Nahbereich ist, wird ein aufzubauendes Gespräch über den Festnetzanschluss, an dem die GSM Home Basestation angeschlossen ist, zum günstigeren Festnetztarif abgewickelt. Befindet sich das Mobiltelefon aber außerhalb des Nahbereichs, so wird das Gespräch nicht über das Festnetz abgewickelt, sondern über das Mobilnetz und zum teureren Mobilfunktarif. Voraussetzung hierfür aber ist, dass der Mobilfunkbetreiber gleichzeitig auch ein Festnetz betreibt, über das dann je nach Betriebsmodus ein Gespräch abgewickelt werden kann. Ein weiteres Problem dieses bekannten Systems liegt darin, dass ein Gespräch, das aufgrund der hinreichenden Nähe des Mobiltelefons zur GSM Home Basestation über das Festnetz abgewickelt wird, zusammen bricht, wenn sich der Telefonierende mit seinem Mobiltelefon aus dem Nahbereich herausbewegt. Denn in diesem Fall erkennt die GSM Home Basestation das Mobiltelefon nicht mehr, das Gespräch müsste nun über das Funknetz laufen. Der Telefonierende ist gezwungen, die Gesprächsverbindung nochmals anzuwählen und neu aufzubauen. Im anderen Fall, wenn sich der Telefonierende während des Gesprächs in den Nahbereich bewegt, kann natürlich die Mobilfunkverbindung trotz hinreichender Nähe zur GSM Home Basestation aufrecht erhalten bleiben, jedoch telefoniert er dann zu den höheren Mobilfunktarifen und kann den eigentlichen Vorteil dieses Systems nicht nutzen. Will er den günstigen Festnetztarif nutzen muss er auch in diesem Fall das Gespräch beenden und neu aufbauen, dann über den Festnetzanschluss.

Dokument WO 00/27152 A1 offenbart ein Verfahren zur Bestimmung der Heimzone einer Mobilstation.

Der Erfindung liegt das Problem zugrunde, ein Verfahren anzugeben, das die eingangs genannten Probleme beseitigt.

Zur Lösung dieses Problems ist bei einem Verfahren der eingangs genannten Art erfindungsgemäß vorgesehen,
dass eine lokale nutzerseitige Feststation ein erstes Signal begrenzter Reichweite sendet, das von einem der Feststation zugeordneten Mobiltelefon empfangen wird, sofern sich dieses innerhalb der Reichweite des Sendesignals befindet, und
dass das Mobiltelefon bei Empfang des ersten Signals ein zweites Signal an eine Basisstation des Telekommunikationssystems sendet, die bei Empfang des zweiten Signals auf einen anderen Nutzungstarif umschaltet.

Beim erfindungsgemäßen Verfahren nach Anspruch 1 wird von der lokalen Feststation ein Signal begrenzter Reichweite ausgesendet, das vom Mobiltelefon dann empfangen wird, wenn es nahe genug zur Feststation ist. Die Information an die Basisstation, dass das Mobiltelefon hinreichend nah zur Feststation steht und infolgedessen die Telekommunikation zum günstigeren Nutzungstarif abgerechnet werden kann, wird anschließend vom Mobiltelefon selbst an die Basisstation übertragen, wozu das Mobiltelefon ein zweites Signal aussendet. Bei Empfang dieses zweiten Signals seitens der Basisstation erfolgt dann die Umschaltung des Tarifs. Das Verfahren nutzt zur Signal- und Informationsübertragung ausschließlich das Mobilfunknetz, ein Festnetz ist hier nicht erforderlich. Infolgedessen bietet sich dieses Verfahren insbesondere für Netzbetreiber an, die ausschließlich ein Mobilfunknetz betreiben. Diese können dann ihren Netzteilnehmern die Möglichkeit unterschiedlicher Nutzungstarife je nach Standort bieten. Darüber hinaus tritt beim erfindungsgemäßen Verfahren beim Bewegen in die oder beim Verlassen der Reichweite des Feststationssignals keine Gesprächsunterbrechung ein, da in diesen Fällen über das Mobiltelefon lediglich eine entsprechende Mitteilung an die Basisstation gesendet wird, wo dann der jeweilige Nutzungstarif eingestellt wird. Dies erfolgt unabhängig vom parallel laufenden Gespräch über das Mobilfunknetz, der Benutzer merkt hiervon nichts.

Zweckmäßig ist es, wenn die Feststation ein codiertes erstes Signal sendet, das heißt, Feststation und Mobiltelefon sind einander über die Signalcodierung zugeordnet. Es kann also das Feststationssignal nur von einem zugeordneten Mobiltelefon empfangen werden, das das codierte erste Signal lesen kann. Das erste Signal kann dabei getaktet in vorbestimmten Zeitabständen oder aber kontinuierlich gesendet werden.

In Weiterbildung des Erfindungsgedankens kann vorgesehen sein, dass das zweite Signal gesendet wird, sobald sich das betriebsbereite Mobiltelefon innerhalb der Reichweite des ersten Signals befindet, oder dass das zweite Signal nur dann gesendet wird, wenn eine Gesprächsverbindung aufgebaut werden soll oder bereits aufgebaut ist und sich das Mobiltelefon innerhalb der Reichweite des ersten Signals befindet. Im Rahmen der erstgenannten Erfindungsalternative erfolgt also die Sendung des zweiten Signals unabhängig davon, ob eine Gesprächsverbindung aufgebaut werden soll oder bereits aufgebaut ist, das heißt, die Basisstation erhält in jedem Fall die Information, dass das Mobiltelefon nahe genug an der Feststation ist. Im Rahmen der zweitgenannten Alternative wird das zweite Signal nur dann gesendet, wenn eine Gesprächsverbindung aufgebaut werden soll oder bereits ein Gespräch geführt wind und das Mobiltelefon nahe genug zur Feststation steht.

Unabhängig davon, gemäß welcher der genannten Alternativen das zweite Signal an die Basisstation gesendet wird, kann dieses nur einmal oder in Abständen mehrmals nacheinander gesendet werden, alternativ hierzu kann auch die kontinuierliche Ausgabe des zweiten Signals vorgesehen sein.

Wird das zweite Signal getaktet mehrmals nacheinander oder kontinuierlich gesendet, so kann die Basisstation anhand des Eingangs des zweiten Signals erkennen, ob das Mobiltelefon noch nahe genug zur Feststation steht oder nicht. Bleibt das getaktete zweite Signal aus oder bricht das zweite Signal bei kontinuierlichem Sendebetrieb ab, so hat sich der Telefonierende aus dem Bereich der Reichweite der Feststation hinausbewegt. Wird nur einmal das zweite Signal gesendet, unabhängig davon, ob dies sofort dann erfolgt, wenn sich das Mobiltelefon in den Nahbereich der Feststation bewegt oder erst bei Gesprächsaufbau, so ist es vorteilhaft, wenn das Mobiltelefon ein drittes Signal an die Basisstation sendet, wenn es außerhalb der Reichweite des ersten Signals ist oder die Reichweite des ersten Signals verlassen ist. In diesem Fall erhält die Basisstation über das vom Mobiltelefon gegebene dritte Signal die Information, das wiederum auf den entsprechenden Nutzungstarif umzuschalten ist, der dann gilt, wenn das Mobiltelefon hinreichend weit von der Feststation entfernt ist.

Für den Benutzer ist es zweckmäßig, wenn am Display des Mobiltelefons zumindest angezeigt wird, wenn sich das Mobiltelefon innerhalb der Reichweite des ersten Signals befindet, da er dann erkennen kann, dass er zu dem billigeren Nutzungstarif telefonieren kann.

Das erste Signal ist zweckmäßigerweise ein Funksignal, zweckmäßigerweise bedient man sich hier eines Bluetooth-Signals, wozu seitens des Mobiltelefons eine entsprechende Bluetooth-Kommunikationsschnittstelle vorhanden ist. Alternativ kann auch ein DECT-Signal mit einer geeigneten DECT -Kommunikationsschnittstelle seitens des Mobiltelefons verwendet werden.

Neben dem Verfahren betrifft die Erfindung ferner ein System nach Anspruch 7, das zur Durchführung des beschriebenen Verfahrens geeignet ist, umfassend ein Mobilfunknetz mit mindestens einer Basisstation sowie ein innerhalb des Mobilfunknetzes betreibbares Mobiltelefon und eine dem Mobiltelefon zugeordnete nutzerseitige lokale Feststation, wobei
- die Feststation ein Sendemittel zum Senden eines ersten Signals begrenzter Reichweite aufweist,
- das Mobiltelefon ein Empfangsmittel für das erste Signal aufweist,
- das Mobiltelefon ein Sendemittel für ein zweites, an die Basisstation zu sendendes Signal bei Empfang des ersten Signals aufweist, und
- die Basisstation Mittel zum Umschalten von einem ersten auf einen zweiten Nutzungstarif für die Benutzung des Mobilfunknetzes durch das Mobiltelefon bei Empfang des zweiten Signals aufweist.

Die Sendemittel der Feststation und die Empfangsmittel des Mobiltelefons können zum Senden eines codierten ersten Signals ausgebildet sein. Die Sendemittel der Feststation können darüber hinaus einen getakteten oder kontinuierlichen Sendebetrieb des ersten Signals ermöglichen.

In Weiterbildung des Erfindungsgedankens kann vorgesehen sein, dass die Sendemittel des Mobiltelefons zum Senden des zweiten Signals unmittelbar bei Empfang des ersten Signals durch das betriebsbereite Mobiltelefon ausgebildet sind. Alternativ hierzu können die Sendemittel auch zum Senden des zweiten Signals nur beim Aufbau oder bei Bestehen einer Gesprächsverbindung und bei sich innerhalb der Reichweite des ersten Signals befindlichen Mobiltelefon ausgebildet sein. Das zweite Signal kann dabei nur einmal, in Abständen mehrmals getaktet nacheinander oder kontinuierlich gesendet werden.

Insbesondere bei der Ausgestaltung, bei der das zweite Signal nur einmal gesendet wird, ist es zweckmäßig, wenn die Sendemittel des Mobiltelefons bei einem Standort außerhalb der Reichweite des ersten Signals oder bei Verlassen der Reichweite des ersten Signals zum Senden eines dritten Signals an die Basisstation ausgebildet sind.

Zweckmäßig ist es, wenn am Display des Mobiltelefons zumindest anzeigbar ist, wenn sich das Mobiltelefon innerhalb der Reichweite des ersten Signals befindet, gegebenenfalls kann auch eine entsprechende Anzeige erfolgen, wenn sich der Benutzer aus dem Bereich bewegt. Dies kann ihm beispielsweise dadurch signalisiert werden, dass das Mobiltelefon einen Piepston oder dergleichen erzeugt, der das Verlassen des Nahbereichs der Feststation anzeigt, unabhängig davon, ob in diesem Moment telefoniert wird oder nicht. Natürlich ist es auch möglich, dem Mobiltelefonbenutzer das Eindringen in den Reichweitebereich über diesen Piepston zu signalisieren.

Die Sendemittel der Feststation und die Empfangsmittel des Mobiltelefons können bei dem zum Senden bzw. Empfangen des ersten Signals in Form eines Funksignals, bevorzugt eines Bluetooth-Signals oder eines DECT-Signals unter Verwendung geeigneter Kommunikationsschnittstellen ausgebildet sein.

Um Sicherheit gegen eine missbräuchliche Nutzung des Systems zu haben kann zweckmäßigerweise vorgesehen sein, dass die Feststation für die Leistungsversorgung einen Netzanschluss aufweist. Die Feststation ist also nur an einer 220 V-Leitung betreibbar, was es verhindert, dass die Feststation vom Systemnutzer zusammen mit dem Mobiltelefon einfach mitgenommen wird, so dass sich das Mobiltelefon immer im Reichweitebereich der Feststation befindet. Zweckmäßig ist es ferner, wenn die Feststation Empfangs- und Vergleichsmittel für eine zur Inbetriebnahme der Feststation, auch nach einer Unterbrechung der Leistungsversorgung über das Mobiltelefon emzugabende und an die Feststation zu sendende Zugangscodierung aufweist. Kennt ein die Feststation und/oder das Mobiltelefon in Händen habender Dritter diese Zugangscodierung nicht, so ist es ihm nicht möglich, das System gegebenenfalls unbefugt nutzen zu können.

Nach einer besonders zweckmäßigen Weiterbildung der Erfindung kann vorgesehen sein, dass die Feststation eine Anschlusseinrichtung an ein vorzugsweise vom Netzbetreiber betriebenes Festnetz sowie eine Einrichtung aufweist, über die die Feststation durch den Netzbetreiber durch Übertragung einer Freischaltcodierung zur Inbetriebnahme freischaltbar ist. Der Betrieb der Feststation wird bei dieser Erfindungsausgestaltung also durch den Netzbetreiber selbst gesteuert. Hierzu bedient man sich eines Festnetzanschlusses, über den der Netzbetreiber direkten Zugang zur Feststation hat. Das Festnetz sollte zweckmäßigerweise vom Netzbetreiber selbst betrieben werden. Alternativ besteht natürlich auch die Möglichkeit, dass der Netzbetreiber über das von einem anderen Netzbetreiber betriebene Festnetz auf die Feststation zugreift.

Zusätzlich oder alternativ dazu besteht die Möglichkeit, dass die Feststation ein Empfangsmittel zum Empfangen eines von der Basisstation über das Mobilfunknetz gebbaren Freischaltsignals sowie eine Einrichtung zum Freischalten aufweist.

Neben dem System betrifft die Erfindung des Weiteren eine Feststation nach Anspruch 15, die im Rahmen des Verfahrens bzw. des Systems eingesetzt werden kann. Diese zeichnet sich durch Sendemittel zum Senden eines codierten Funksignals begrenzter Reichweite aus Weitere zweckmäßige Erfindungsausgestaltungen der Feststation sind den abhängigen Unteransprüchen zu entnehmen.

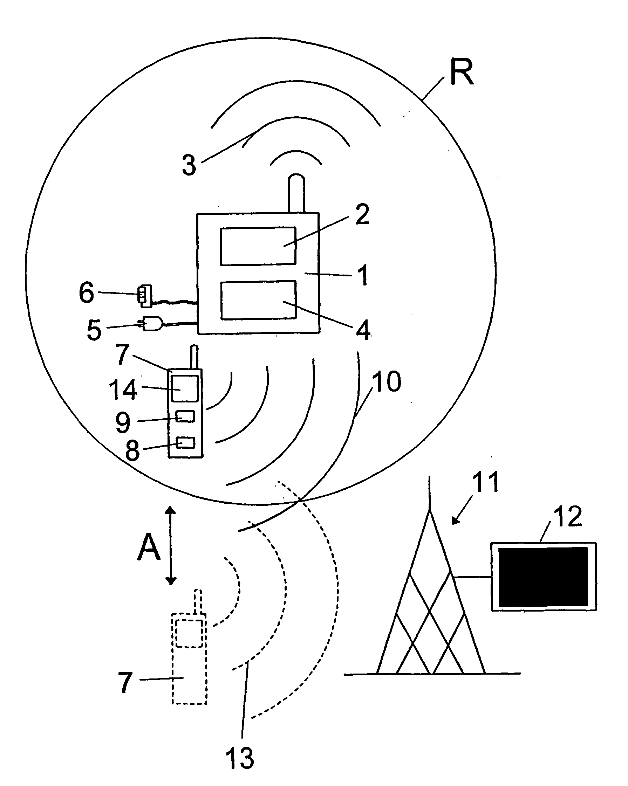

Weitere Vorteile, Merkmale und Einzelheiten der Erfindung ergeben sich aus dem im Folgenden beschriebenen Ausführungsbeispiel sowie anhand der Zeichnung.

In dieser ist in Form einer Prinzipskizze das erfindungsgemäße System nebst einer erfindungsgemäßen Feststation gezeigt. Die Feststation 1 ist lokal benutzerseitig angeordnet, normalerweise in einem Gebäude. Die Feststation verfügt über ein Sendemittel 2, über das ein Signal 3 begrenzter Reichweite ausgesendet wird. Die begrenzte Reichweite ist durch den großen Kreis R angedeutet. Bei dem Signal handelt es sich zweckmäßigerweise um ein Funksignal, insbesondere um ein Bluetooth-Signal. Das Signal 3 kann von der Feststation 1 getaktet in vorbestimmten Zeitabständen oder aber kontinuierlich gesendet werden.

Die Feststation 1 umfasst ferner ein Empfangsmittel 4, das zum Empfangen eines Zugangscodes, der vom nachfolgend noch beschriebenen Mobiltelefon zur Inbetriebnahme gesandt wird, dient. Zur Leistungsversorgung der Feststation und ihrer Elemente ist ein Netzanschluss an eine 220 V-Leitung vorgesehen, ferner zeigt die Feststation 1 auch einen Anschluss 6 an ein Festnetz.

Das System umfasst ferner ein Mobiltelefon 7, das, wie durch den Pfeil Aangedeutet ist, beliebig in den Reichweitebereich und aus diesem bewegt werden kann Das hier als Prinzipskizze gezeigte Mobiltelefon besitzt eine Empfängereinrichtung 8, die zum Empfang der von der Feststation 1 ausgesandten codierten Signale 3 dient, sofern das Mobiltelefon 7 im Reichweitebereich R ist. Die Empfangsmittel 8 umfassen eine dem Funksignalstandard entsprechende Kommunikationsschnittstelle, also z B. eine Bluetooth- oder DECT-Schnittstelle.

Wird nun das Signal 3 über das Empfangsmittel 8 empfangen so sendet das Mobiltelefon über das Sendemittel 9 Signale 10 an eine Basisstation 11 des Mobilfunknetzes, wobei die Signale 10 angeben, dass das erste Signal 3 empfangen wurde und sich mithin das Mobiltelefon im Reichweitebereich R der Feststation 1 befindet. Die Basisstation 11 verfügt über entsprechende Empfangsmittel, um das Signal 10 aufzunehmen und zu verarbeiten. Wird das Signal 10 von der Basisstation 11 empfangen so wird dort über geeignete Umschaltmittel 12 von einem "T arif 1" auf einen "T arif 2" umgeschalten, der als Berechnungsgrundlage für Gespräche dient, solange sich das Mobiltelefon 7 im Reichweitebereich R befindet.

Bewegt sich das Mobiltelefon 7 aus dem Reichweitebereich R hinaus so schaltet die Basisstation 11 bzw. das Umschaltmittel 12 wieder von Tarif II auf Tarif I um. Die Kenntnis über den jeweiligen Standort des Mobiltelefons 7 erhält die Basisstation 11 entweder daraus, dass das Signal 10 nicht mehr empfangen wird. Das Signal 10 kann kontinuierlich während der Aufenthaltszeit im Bereich R gesendet werden oder nacheinander getaktet. Bleibt nun das Signal 10 aus so ist für die Basisstation 11 erkennbar, dass das Mobiltelefon sich nicht mehr im Reichweitebereich R befindet, die Tarifumschaltung kann erfolgen. Das Signal 10 wird natürlich auch nicht mehr gesendet, wenn das Mobiltelefon 7 ausgeschalten wird. Dann erfolgt zweckmäßigerweise ebenfalls eine Tarifumschaltung auf den Mobilfunktarif. Wird das Mobiltelefon 7 wieder in Betrieb genommen so empfängt es das Signal 3 und kann das Signal 10 aussenden, so dass die Basisstation erneut den günstigen Tarif schalten kann.

Für den Fall, dass das Signal 10 nicht getaktet oder kontinuierlich gegeben wird, ist es möglich, dass die Sendemittel 9 ein drittes Signal 13 aussendet, wie gestrichelt angedeutet, wenn sich das Mobiltelefon 7 aus dem Reichweitebereich R belegt. Geht dieses Signal an der Basisstation 11 ein erfolgt ebenfalls die Tarifumschaltung.

Ferner ist ein Display 14 am Mobiltelefon 7 vorgesehen, in dem dem Benutzer über eine geeignete Markierung oder dergleichen angezeigt werden kann, wenn er sich innerhalb des Reichwitebereichs R befindet.

Zur Inbetriebnahme der Feststation ist entweder über das Mobiltelefon 7 über dessen Tastatur ein Zugangscode einzugeben, der vom Mobiltelefon 7 an die Feststation 1 gesendet und dort über die Empfangsmittel 4 aufgenommen wird. Die Empfangsmittel 4, die gleichzeitig auch als Vergleichsmittel ausgebildet sind, vergleichen den Zugangscode mit einem dort hinterlegten Zugangscode, bei Übereinstimmung kann die Feststation 1 in Betrieb genommen werden.

Eine alternative Inbetriebnahme kann über den Festnetzanschluss 6 erfolgen. Über diesen Festnetzanschluss 6 kann der Netzbetreiber direkt auf die Feststation 1 zugreifen und diese anwählen, um dann, wenn die Voraussetzungen gegeben sind, die Feststation 1 in Betrieb zu nehmen. Dieser Festnetzanschluss 6 bietet darüber hinaus eine gewisse Sicherheit gegen Migbrauch, da bei einem Entfernen der Feststation 1 vom momentanen Standort zum einen die Leistungsversorgungsverbindung 5 wie auch die Festnetzverbindung 6 getrennt werden müssen und die Feststation 1 an einem anderen Ort erneut angeschlossen werden muss. Die Inbetriebnahme muss dann nochmals neu erfolgen, wozu der Netzbetreiber tätig werden muss, der dann über den Standortwechsel Kenntnis erhält und gegebenenfalls eine missbräuchliche Verwendung erkennen kann.

## Patentansprüche

1. Verfahren zum Betrieb eines Telekommunikationssystems zur Ermöglichung eines Betriebs eines Mobiltelefons (7) mit unterschiedlichen, vom Standort abhängigen Nutzungstarifen (Price 1, 2), bei dem eine lokale nutzerseitige Feststation (1) ein erstes codiertes Signal (3) begrenzter Reichweite (R) sendet, das von einem der Feststation (1) zugeordneten Mobiltelefon (7) empfangen wird, sofern sich dieses innerhalb der Reichweite (R) des ersten Signals (3) befindet, und bei dem das Mobiltelefon (7) bei Empfang des ersten Signals (3) ein zweites Signal (10) an eine Basisstation (11) des Telekommunikationssystems sendet, die bei Empfang des zweiten Signals (10) auf einen Heimzonen-Nutzungstarif (Price 2) umschaltet,
**dadurch gekennzeichnet,**
**dass** das erste Signal (3) getaktet gesendet wird und
das zweite Signal (10) in Abständen mehrmals nacheinander oder kontinuierlich gesendet wird und die Basisstation (10) auf den anderen Nutzungstarif (Price 1) zurückgeschaltet wird, wenn das zweite Signal (10) nicht mehr empfangen wird.

2. Verfahren nach Anspruch 1,
**dadurch gekennzeichnet,**
**dass** in der Basisstation (11) auf den Heimzonen-Nutzungstarif (Price2) bei bestehender Gesprächsverbindung umgeschaltet wird, wenn das Mobiltelefon (7) in Reichweite (R) des ersten Signals (3) kommt und das zweite Signal (10) aussendet.

3. Verfahren nach Anspruch 1,
**dadurch gekennzeichnet,**
**dass** in der Basisstation (11) bei bestehender Gesprächsverbindung auf den anderen Nutzungstarif (Price 1) zurückgeschaltet wird, wenn sich das Mobiltelefon (7) aus der Reichweite (R) des ersten Signals (3) bewegt und das zweite Signal (10) in der Basisstation (11) nicht empfangen wird.

4. Verfahren nach Anspruch 1,
**dadurch gekennzeichnet,**
**dass** das zweite Signal (10) an die Basisstation (11) gesendet wird, sobald sich das betriebsbereite Mobiltelefon (7) innerhalb der Reichweite (R) des ersten Signals (3) befindet oder vor dem Aufbau einer Gesprächsverbindung, wenn sich das Mobiltelefon (7) innerhalb der Reichweite (R) des ersten Signals (3) befindet.

5. Verfahren nach einem der vorangehenden Ansprüche,
**dadurch gekennzeichnet,**
**dass** auf einem Display (14) des Mobiltelefons (7) angezeigt wird, ob sich das Mobiltelefon (7) innerhalb der Reichweite (R) des ersten Signals (3) befindet.

6. Verfahren nach Anspruch 1,
**dadurch gekennzeichnet,**
**dass** das erste Signal ein Bluetooth-Signal oder ein DECT-Signal ist, wobei die Sende- und Empfangseinheiten (2, 4, 8) in der Feststation (7) bzw. im Mobiltelefon (7) entsprechend ausgebildet sind.

7. System zur Durchführung des Verfahrens nach einem der Ansprüche 1 bis 6, umfassend ein Mobilfunknetz mit mindestens einer Basisstation (11) sowie ein innerhalb des Mobilfunknetzes betreibbares Mobiltelefon (7) und eine dem Mobiltelefon (7) zugeordnete nutzerseitige lokale Feststation(1), wobei
- die Feststation (1) ein Sendemittel (2) zum Senden eines ersten Signals (3) begrenzter Reichweite (R) aufweist,
- das Mobiltelefon (7) ein Empfangsmittel (8) für das erste Signal (3) aufweist,
- das Mobiltelefon (7) ein Sendemittel (9) für ein zweites, an die Basisstation (11) zu sendendes Signal (10) bei Empfang des ersten Signals (3) aufweist, und
- die Basisstation (11) Mittel (12) zum Umschalten von einem ersten auf einen zweiten Nutzungstarif (Price 1, 2) für die Benutzung des Mobilfunknetzes durch das Mobiltelefon (7) bei Empfang des zweiten Signals (10) aufweist,
- wobei die Sendemittel (2) der Feststation (1) zum Senden und die Empfangsmittel (8) des Mobiltelefons (7) zum Empfangen eines codierten ersten Signals (3) ausgebildet sind;
**dadurch gekennzeichnet,**
**dass** ein getaktetes Senden des ersten Signals (3) vorgesehen ist, und
ein getaktetes oder kontinuierliches Senden des zweiten Signals (10) vorgesehen ist,
wobei die Basisstation (11) auf den Heimzonen-Nutzungstarif (Price 2) bei Ausbleiben des zweiten Signals (10) zurückschaltet.

8. System nach Anspruch 7,
**dadurch gekennzeichnet,**
**dass** das das Senden des zweiten Signals (10) nur beim Aufbau oder bei Bestehen einer Gesprächsverbindung vorgesehen ist, wobei sich das Mobiltelefon (7) innerhalb der Reichweite (R) des ersten Signals (3) befindet,
wobei die Sendemittel (9) derart ausgebildet sind, dass das zweite Signal (10) in Abständen mehrmals nacheinander oder kontinuierlich gesendet wird und in der Basisstation (11) ein Zurückschalten auf den Nutzungstarif (Price 1) vorgesehen ist, wenn das zweite Signal (10) nicht mehr empfangbar ist.

9. System nach Anspruch 7,
**dadurch gekennzeichnet,**
**dass** bei einem Verlassen bzw. Eintreten in die Reichweite (R) des ersten Signals (3) eine bestehende Gesprächsverbindung erhalten bleibt und in Abhängigkeit eines Empfangs bzw. Nichtempfangs des zweiten Signals (10) der Nutzungstarif (Price 1, Price 2) in der Basisstation (11) umschaltbar ist.

10. System nach Anspruch 7,
**dadurch gekennzeichnet,**
**dass** auf einem Display (14) des Mobiltelefons (7) ein Empfang des ersten Signals (3) signalisierbar ist.

11. System nach Anspruch 7,
**dadurch gekennzeichnet,**
**dass** das erste Signal (3) ein Bluetooth-Signal oder ein DECT-Signal ist und die Sende- und Empfangseinheiten (2, 4, 8) in der Feststation (1) bzw. im Mobiltelefon (7) entsprechend ausgebildet sind.

12. System nach einem der Ansprüche 7 bis 11,
**dadurch gekennzeichnet,**
**dass** die Feststation (1) für die Leistungsversorgung einen Netzanschluss (5) und Empfangs- und Vergleichsmittel (4) zur Inbetriebnahme der Feststation (1)aufweist,
wobei nach einer Unterbrechung der Leistungsversorgung über das Mobiltelefon (7) eine Zugangscodierung eingebbar und eine Übertragung dieser an die Feststation (1) vorgesehen ist.

13. System nach einem der Ansprüche 7 bis 12,
**dadurch gekennzeichnet,**
**dass** die Feststation (1) eine Anschlusseinrichtung (6) an ein vorzugsweise vom Netzbetreiber betriebenes Festnetz sowie eine Einrichtung aufweist, über die die Feststation (1) durch den Netzbetreiber durch Übertragung einer Freischaltcodierung zur Inbetriebnahme freischaltbar ist.

14. System nach einem der Ansprüche 7 bis 13,
**dadurch gekennzeichnet,**
**dass** die Feststation (1) ein Empfangsmittel zum Empfangen eines von der Basisstation (11) über das Mobilfunknetz gebbaren Freischaltsignals sowie eine Einrichtung zum Freischalten aufweist.

15. Feststation, geeignet für das Verfahren nach einem der Ansprüche 1 bis 6 bzw. in einem System nach einem der Ansprüche 7 bis 14,
bei der Sendemittel (2) zum Senden eines codierten Funksignals (3) begrenzter Reichweite (R) vorgesehen sind,
**dadurch gekennzeichnet,**
**dass** die Sendemittel (2) der Feststation (1) zum getakteten oder kontinuierlichen Senden des ersten codierten Funksignals (3) ausgebildet sind.

16. Feststation nach Anspruch 15,
**dadurch gekennzeichnet,**
**dass** die Sendemittel (2) zum Senden und die Empfangsmittel (4) zum Empfangen eines Bluetooth-Signals oder eines DECT-Signals ausgebildet sind.

17. Feststation nach einem der Ansprüche 15 bis 16,
**dadurch gekennzeichnet,**
**dass** die Feststation (1) für die Leistungsversorgung einen Netzanschluss (5) Empfangs- und Vergleichsmittel (4) für eine zur Inbetriebnahme der Feststation (1), auch nach einer Unterbrechung der Leistungsversorgung aufweist, wobei über das Mobiltelefon (7) eine Zugangscodierung eingebbar ist, die zur Übertragung an die Feststation (1) vorgesehen ist.

18. Feststation nach einem der Ansprüche 15 bis 17,
**dadurch gekennzeichnet,**
**dass** die Feststation (1) eine Anschlusseinrichtung (6) an ein vorzugsweise vom Netzbetreiber betriebenes Festnetz sowie eine Einrichtung aufweist, über die die Feststation durch den Netzbetreiber durch Übertragung einer Freischaltcodierung zur Inbetriebnahme freischalten kann.

19. Feststation nach einem der Ansprüche 15 bis 18,
**dadurch gekennzeichnet,**
**dass** die Feststation (1) ein Empfangsmittel zum Empfangen eines von der Basisstation gebbaren Freischaltsignals sowie eine Einrichtung zum Freischalten aufweist.

## Claims

1. A method of operating a telecommunication system that enables operation of a mobile telephone (7) at different user rates (price 1, 2) that are dependent on the location, in which a local fixed station (1) at the user end transmits a first coded signal (3) of limited range (R) which is received by a mobile telephone (7) assigned to the fixed station (1) insofar the latter is located within range (R) of the first signal (3) and in which the mobile telephone (7) upon reception of the first signal (3) transmits a second signal (10) to a base station (11) of the telecommunication system, which base station switches over to a home area user rate (price 2) upon reception of the second signal (10), **characterized in that** the first signal (3) is transmitted at a clock rate and the second signal (10) at intervals several times in succession or continuously and the base station (11) is switched back to the other user rate (price 1) if the second signal (10) is no longer received.

2. A method as claimed in claim 1, **characterized in that** in the base station (11) the home area user rate (price 2) is switched to during an existing call connection when the mobile telephone (7) comes within range (R) of the first signal (3) and transmits the second signal (10).

3. A method as claimed in claim 1, **characterized in that** in the base station (11) the other user rate (price 1) is changed back to during an existing call connection when the mobile telephone (7) moves out of range (R) of the first signal (3) and the second signal (10) is not received in the base station (11).

4. A method as claimed in claim 1, **characterized in that** the second signal (10) is transmitted to the base station (11) as soon as the mobile telephone (7) which is ready for operation is within range (R) of the first signal (3), or, before a call connection is set up, when the mobile telephone (7) is within range (R) of the first signal (3).

5. A method as claimed in any one of the preceding claims, **characterized in that** a display (14) of the mobile telephone (7) indicates whether the mobile telephone (7) is within range (R) of the first signal (3).

6. A method as claimed in claim 1, **characterized in that** the first signal is a Bluetooth signal or a DECT signal, while the transmission and receiving means (2, 4, 8) in the fixed station (7) or mobile telephone (7) are provided accordingly.

7. A system for carrying out the method as claimed in any one of the claims 1 to 6, including a mobile radio network with at least one base station (11) as well as a mobile telephone (7) that can operate within the mobile radio network, and a local fixed station (1) that is provided at the user end and is assigned to the mobile telephone (7), where
- the fixed station (1) includes a transmission means (2) for transmitting a first signal (3) of limited range (R),
- the mobile telephone (7) includes a receiving means (8) for the first signal (3),
- the mobile telephone (7) includes a transmission means (9) for a second signal (10) that is to be transmitted to the base station (11) upon receiving the first signal (3), and
- the base station (11) includes means (12) for switching over, upon receiving the second signal (10), from a first to a second user rate (price 1, 2) for the use of the mobile radio network by the mobile telephone (7),
- where the transmission means (2) of the fixed station (1) are arranged for transmitting and the receiving means (8) of the mobile telephone (7) are arranged for receiving a coded first signal (3);
**characterized in that** clocked transmission of the first signal (3) is provided and a clocked or continuous transmission of the second signal (10) is provided whereas the base station (11) switches back to the home area user rate (price 2) when the second signal (10) fails to occur.

8. A system as claimed in claim 7, **characterized in that** the second signal (10) is transmitted only upon call setup or during a call connection, while the mobile telephone (7) is then within range (R) of the first signal (3), the transmission means (9) then being arranged such that the second signal (10) is transmitted at intervals several times in succession or continuously and the base station (11) is switched back to the other user rate (price 1) when the second signal (10) can no longer be received.

9. A system as claimed in claim 7, **characterized in that** when the range (R) of the first signal (3) is left or entered, an existing call connection is maintained and the user rate (price 1, price 2) in the base station can be switched over in dependence on receiving or not receiving the second signal (10).

10. A system as claimed in claim 7, **characterized in that** a reception of the first signal (3) can be signaled on a display (14) of the mobile telephone (7).

11. A system as claimed in claim 7, **characterized in that** the first signal (3) is a Bluetooth signal or a DECT signal and the transmission and receiving means (2, 4, 8) in the fixed station (1) or in the mobile telephone (7) are arranged accordingly.

12. A system as claimed in any one of the claims 7 to 11, **characterized in that** the fixed station (1) includes for its power supply a connection to the electrical network (5) and receiving and comparing means (4) for taking the fixed station into operation, while it is possible after an interruption of the power supply to enter an access code via the mobile telephone (7) and send it to the fixed station.

13. A system as claimed in any one of the claims 7 to 12, **characterized in that** the fixed station (1) has a connection (6) to a fixed network preferably operated by the network provider as well as an arrangement via which the fixed station (1) can be enabled for operation by the network provider by the transmission of an enable code.

14. A system as claimed in any one of the claims 7 to 13, **characterized in that** the fixed station (1) includes receiving means for receiving an enable signal which can be sent by the base station (11) over the mobile radio network as well as an enable arrangement.

15. A fixed station that is suitable for the method as claimed in any one of the claims 1 to 6 and for a system as claimed in any one of the claims 7 to 14, respectively, which station includes transmission means (2) for transmitting an encoded radio signal (3) of limited range (R), **characterized in that** the transmission means (2) of the fixed station (1) are arranged for clocked or continuous transmission of the first coded radio signal (3).

16. A fixed station as claimed in claim 15, **characterized in that** the transmission means (2) of the fixed station (1) are arranged for transmitting and the receiving means (4) for receiving a Bluetooth signal or a DECT signal.

17. A fixed station as claimed in one of the claims 15 to 16, **characterized in that** the fixed station (1) includes for its power supply a connection to the electrical network (5) and receiving and comparing means (4) for taking the fixed station (1) into operation, while it is possible after an interruption of the power supply to enter an access code via the mobile telephone (7) and send it to the fixed station (1).

18. A fixed station as claimed in any one of the claims 15 to 17, **characterized in that** the fixed station (1) has a connection (6) to a fixed network preferably operated by the network provider as well as an arrangement via which the fixed station can be enabled for operation by the network provider by the transmission of an enable code.

19. A fixed station as claimed in any one of the claims 15 to 18, **characterized in that** the fixed station (1) includes a receiving means for receiving an enable signal that can be issued by the base station, as well as an enabling device.

## Revendications

1. Procédé de fonctionnement d'un système de communication pour permettre un fonctionnement d'un radiotéléphone mobile (7) avec différents tarifs d'utilisation dépendant de la position (price 1, 2) dans lequel une station fixe (1) locale côté utilisateur présente un premier signal codé (3) de portée (R) limitée qui est reçu par un radiotéléphone mobile (7) affecté à la station fixe (1) dans la mesure où celui-ci se trouve dans la portée (R) du premier signal (3) et dans lequel le radiotéléphone mobile (7) transmet, à la réception du premier signal (3) un deuxième signal (10) à une station de base (11) du système de télécommunication qui commute en cas de réception du deuxième signal (10) sur un tarif d'utilisation de zone domiciliaire (price 2),
**caractérisé en ce**
**que** le premier signal (3) est transmis sous forme cadencée et
le deuxième signal (10) est transmis plusieurs fois d'affilée par intervalles ou en continu et la station de base (10) est ramenée à un autre tarif d'utilisation (price 1) lorsque le deuxième signal (10) n'est plus reçu.

2. Procédé selon la revendication 1,
**caractérisé en ce**
**que** l'on commute dans la station de base (11) sur le tarif d'utilisation de zone domiciliaire (price 2) en cas de communication de conversation existante lorsque le radiotéléphone mobile (7) entre dans la portée (R) du premier signal (3) et transmet le deuxième signal (10).

3. Procédé selon la revendication 1,
**caractérisé en ce**
**que**, dans la station de base (11), une nouvelle commutation est effectuée sur l'autre tarif d'utilisation (price 1) en cas de communication de conversation existante lorsque le radiotéléphone mobile (7) se déplace hors de la portée (R) du premier signal (3) et le deuxième signal (10) n'est pas reçu dans la station de base (11).

4. Procédé selon la revendication 1,
**caractérisé en ce**
**que** le deuxième signal (10) est transmis à la station de base (11) dès que le radiotéléphone mobile (7) prêt à l'emploi se trouve dans la portée (R) du premier signal (3) ou avant l'établissement d'une communication de conversation lorsque le radiotéléphone mobile (7) se trouve dans la portée (R) du premier signal (3).

5. Procédé selon l'une des revendications précédentes
**caractérisé en ce**
**qu'**un écran (14) du radiotéléphone mobile (7) affiche si le radiotéléphone mobile (7) se trouve dans la portée (R) du premier signal (3).

6. Procédé selon la revendication 1,
**caractérisé en ce**
**que** le premier signal est un signal bluetooth ou un signal DECT, les unités de transmission et de réception (2, 4, 8) étant conçues de manière correspondante dans la station fixe (7) ou dans le radiotéléphone mobile (7).

7. Système de mise en oeuvre du procédé selon l'une des revendications 1 à 6, comprenant un réseau radiomobile avec au moins une station de base (11) ainsi qu'un radiotéléphone mobile (7) opérant dans le réseau de radiotéléphonie mobile et une station fixe (1) locale côté utilisateur affectée au radiotéléphone mobile (7), dans lequel
- la station fixe (1) présente un moyen de transmission (2) pour la transmission d'un premier signal (3) de portée (R) limitée;
- le radiotéléphone mobile (7) présente un moyen de réception (8) pour le premier signal (3);
- le radiotéléphone mobile (7) présente un moyen de transmission (9) pour un deuxième signal (10) à transmettre à la station de base (11) en cas de réception du premier signal (3) et
- la station de base (11) présente des moyens (12) pour la commutation d'un premier tarif d'utilisation à un deuxième (price 1, 2) pour l'utilisation du réseau radiomobile par le radiotéléphone mobile (7) en cas de réception du deuxième signal (10),
- dans lequel les moyens de transmission (2) de la station fixe (1) sont conçus pour la transmission et les moyens de réception (8) du radiotéléphone mobile (7) pour la réception d'un premier signal (3) codé;
**caractérisé en ce**
**qu'**il est prévu la transmission cadencée du premier signal (3) et
**qu'**il est prévu une transmission cadencée ou continue du deuxième signal (10),
la station de base (11) étant commutée à nouveau au tarif d'utilisation en zone domiciliaire (price 2) en cas d'absence du deuxième signal (10).

8. Système selon la revendication 7,
**caractérisé en ce**
**que** la transmission du deuxième signal (10) est prévue seulement en cas d'établissement ou d'existence d'une communication de conversation, le radiotéléphone mobile (7) se trouvant à l'intérieur de la portée (R) du premier signal (3),
dans lequel les moyens de transmission (9) sont conçus de telle sorte que le deuxième signal (10) soit transmis de manière cadencée à intervalles ou en continu et, dans la station de base (11), il est prévu une nouvelle commutation sur le tarif d'utilisation (price 1) lorsque le deuxième signal (10) ne peut plus être reçu.

9. Système selon la revendication 7,
**caractérisé en ce**
**qu'**en cas de départ ou d'entrée dans la portée (R) du premier signal (3), une communication de conversation existante est conservée et, en fonction de la réception ou de l'absence de réception du deuxième signal (10), le tarif d'utilisation (price 1, price 2) peut être commuté dans la station de base (11).

10. Système selon la revendication 7,
**caractérisé en ce**
**qu'**une réception du premier signal (3) peut être signalée sur un écran (14) du radiotéléphone mobile (7).

11. Système selon la revendication 7,
**caractérisé en ce**
**que** le premier signal (3) est un signal bluetooth ou un signal DECT et les unités de transmission et réception (2, 4, 8) sont conçues en conséquence dans la station fixe (1) ou dans le radiotéléphone mobile (7).

12. Système selon l'une des revendications 7 à 11,
**caractérisé en ce**
**que** la station fixe (1) présente une prise secteur (5) pour l'alimentation électrique et des moyens de réception et comparaison (4) pour la mise en service de la station fixe (1), un codage d'accès pouvant être introduit après une interruption de l'alimentation électrique par l'intermédiaire du radiotéléphone mobile (7) et une transmission de celui-ci à la station fixe (1) étant prévue.

13. Système selon l'une des revendications 7 à 12,
**caractérisé en ce**
**que** la station fixe (1) présente un moyen de connexion (6) à un réseau fixe exploité de préférence par l'exploitant du réseau et un moyen par l'intermédiaire duquel la station fixe (1) peut être déconnectée par transmission d'un codage de déconnexion pour la mise en service.

14. Système selon l'une des revendications 7 à 13,
**caractérisé en ce**
**que** la station fixe (1) présente un moyen de réception pour la réception d'un signal de déconnexion à délivrer par la station de base (11) par l'intermédiaire du réseau radiomobile ainsi qu'un moyen de déconnexion.

15. Station fixe convenant pour le procédé selon l'une des revendications 1 à 6 ou dans un système selon l'une des revendications 7 à 14,
dans laquelle les moyens de transmission (2) sont prévus pour la transmission d'un signal radio (3) codé de portée limitée (R),
**caractérisée en ce**
**que** les moyens de transmission (2) de la station fixe (1) sont conçus pour la transmission cadencée ou continue du premier signal radio codé (3).

16. Station fixe selon la revendication 15,
**caractérisée en ce**
**que** les moyens de transmission (2) sont conçus pour la transmission et les moyens de réception (4) pour la réception d'un signal bluetooth ou d'un signal DECT.

17. Station fixe selon l'une des revendications 15 à 16,
**caractérisée en ce**
**que** la station fixe (1) présente pour l'alimentation électrique une prise secteur (5), des moyens de réception et de comparaison (4) pour une mise en service de la station fixe (1), même après une interruption de l'alimentation électrique, un codage d'accès qui est prévu pour la transmission à la station fixe (1) pouvant être introduit par l'intermédiaire du radiotéléphone mobile (7).

18. Station fixe selon l'une des revendications 15 à 17,
**caractérisée en ce**
**que** la station fixe (1) présente un moyen de raccordement (6) à un réseau fixe exploité de préférence par l'exploitant du réseau ainsi qu'un moyen par l'intermédiaire duquel la station fixe peut être déconnectée par l'exploitant de réseau par transmission d'un codage de déconnexion pour la mise en service.

19. Station fixe selon l'une des revendications 15 à 18,
**caractérisée en ce**
**que** la station fixe présente un moyen de réception pour la réception d'un signal de déconnexion à délivrer par la station de base ainsi qu'un moyen de déconnexion.
